# EUROPEAN PATENT SPECIFICATION

(11) **EP 4 018 238 B1**
(45) Date of publication and mention of the grant of the patent: **06.11.2024**
(21) Application number: 20868101.5
(22) Date of filing: 24.09.2020
(51) Int. Cl.: H01S 3/067, H01S 3/08, H01S 3/083, H01S 3/106, H01S 3/23, H01S 3/00, H01S 3/094, H01S 3/0941, H01S 3/10, H01S 3/16

(54) **PHOTONIC DEVICE**
PHOTONISCHE VORRICHTUNG
DISPOSITIF PHOTONIQUE

(30) Priority: 27.09.2019 US 201962906843 P
(43) Date of publication of application: 29.06.2022
(73) Proprietor: IPG Photonics Corporation, Oxford, MA 01540 (US)
(72) Inventor: De VALICOURT, Guilhem, Webster Road Oxford, MA 01540 (US)
(74) Representative: Müller-Boré & Partner Patentanwälte PartG mbB
(86) International application number: PCT/US2020/052367
(87) International publication number: WO 2021/061890

(56) References cited:
- WO-A1-2017/131898
- WO-A1-2017/131898
- US-A1- 2004 033 004
- US-A1- 2004 156 096
- US-A1- 2004 247 233
- US-A1- 2004 247 233
- US-A1- 2013 209 020
- US-A1- 2014 153 601
- US-A1- 2014 153 601
- US-A1- 2018 351 317
- US-A1- 2018 351 317
- US-A1- 2019 227 230

## Description

### BACKGROUND OF THE DISCLOSURE

### CROSS-REFERENCE TO RELATED APPLICATIONS

The present application claims the benefit of U.S. Provisional Patent Application Serial No. 62/906,843 filed September 27, 2019.

### Field of the Disclosure

The disclosure relates to multiple fiber lasers and amplifiers integrated with a photonic integrated circuit (PIC).

### Background of the Disclosure

The silicon photonic platform can be made with extremely high yield because of the near-ideal starting wafers and the maturity of silicon processes developed for electronics. These desirable features have led to the success of silicon photonics broadly implemented in industrial and scientific applications. The spectroscopic measurements, wavelength division multiplexing (WDM), frequency modulated light detection and ranging (LIDAR), optical coherence tomography (OCT), biomedical and, of course, telecommunication are just a few fields greatly benefiting from the use of silicon photonics. The popularity of silicon (Si) is readily explained by its natural abundance and transparency to the electromagnetic field in the O- and C- bands (1230 - 1260 nm and 1530 to 1565 nm, respectively.)

Silicon photonics, for all its benefits with functionality and yield, still lacks a monolithically integrated light source. Silicon and related group IV materials, such as Ge, are indirect bandgap semiconductors, and thus it is very difficult to create an efficient light source on silicon. In recent years the lasers, using silicon photonics technology, have attracted considerable interest due to the potential low-cost fabrication in CMOS foundries, borrowed from the microelectronics industry. Their integration/co-packaging with a PIC can lead to a total silicon photonics solution for future low-cost and small form factor coherent modules. The PIC systems include SiO₂PIC or Planar Lightwave Circuits (PLCs), silicon-on-insulator also referred to as silicon photonics (SiP), lithium niobate (LiNbO₃), and III-V PICs, such as InP and GaAs. While silicon photonic lasers can be a cost- and space-efficient solution, their commercialization has not been successful due to a few limitations.

First, silicon photonics devices suffer from large on/off-chip optical coupling loss. The resultant laser output power is not sufficient to compensate for the large insertion loss PIC and modulation loss if a modulator is used. Secondly, the propagation loss of silicon waveguide is much greater than that among free-space optical components and other material systems such as silica or silicon nitride. This prevents the use of long external cavities to generate more 'pure' and lower noise lasing light, which is a key enabler for high-order modulation formats to carry more information. Thirdly, silicon material is very sensitive to the thermal disturbances, for example, from package temperature changes or gain medium current changes. As a result, cost-efficient and technically viable integration of high-performance light sources into SiP circuits remains a challenge. The above and other limitations explain why silicon photonics still lacks a monolithically integrated light source.

Yet several approaches have been proposed to integrate gain medium onto a silicon photonic circuit such as the III-V material coupled via lenses or free space. Unfortunately, this approach requires a sealed package known as the gold box which renders the packages cost inefficient. Another approach is to integrate the III - V material via edge coupling, vertical coupling, bonding or direct hetero-epitaxy of these materials on Si. All of the above-disclosed approaches can be compatible with non-hermetic packages, but the use of the III-V material introduces the known limitations including a patterning effect for amplification and high temperature sensitivity. Additionally, if polarization insensitive devices are required, and they usually are, the saturation power is reduced limiting thus the output power.

Fairly recently, attempts have been made to integrate erbium-doped waveguide amplifiers (EDWA) on a PIC, but the performance of these photonic devices is far from the standards required by commercial applications. Yet the integration of EDWAs on silicon is very promising. Indeed, coherent communications have revolutionized core networks and are expected to take over a large share of the market in metropolitan and inter-datacenter networks in the very near future. As modulation formats are moving to higher order of constellation, narrow linewidth lasers with the external cavity are simply irreplaceable. However, as mentioned above, the problem with the known integration methods remains, i.e., the laser cavity length is defined by a PIC and therefore has a limited length due to a small footprint and loss limitations.

A close relative of EDWA is erbium-doped fiber gain media. Generally, fiber to PIC coupling methods are known and include edge-coupling, grating-coupling, and most recently evanescent-coupling - each having their own performance advantages and limitations. The fiber-based gain medium on silicon offers longer cavities reducing the laser linewidth, provides an efficient amplification, has no patterning effect, minimizes temperature sensitivity and increases high output power. Yet the fiber gain media have been only used for laser generation with discrete devices such as opto-VSLI-processors, isolators with a silicon photonics (SiP) micro-ring, WDM couplers and polarization controller, SiP Bragg grating with WDM coupler, optical circulator and an erbium doped fiber (EDF) all located within a fiber loop outside the PIC. The abundance of optical passive and active elements within the fiber loop increases the footprint of a photonic device.

US 2014/153601 A1 describes an apparatus that provides a hybrid InGaAsP/Si laser monolithically integrated in a silicon photonic integrated circuit (PIC) that is suitable for high-performance coherent fiber-optic telecommunications and other applications.

WO 2017/131898 A1 describes an apparatus comprising an optical amplifier and a silicon photonic integrated circuit. The optical amplifier has an inhomogeneously broadened gain material capable of generating a plurality of ensemble gains.

US 2004/247233 A1 describes a passive broad bandwidth spectral wavelength combiner for combining the outputs from multiples transmitter photonic integrated circuit (TxPIC) chips and, thereafter, the amplification of the combined channel signals with a booster optical amplifier couple between the passive optical combiner and the fiber transmission link.

US 2018/351317 A1 describes a photonic circuit that includes an amplifier section or multiple amplifier sections to boost the output power of an optical transmitter and includes additional components including a band pass optical filter, a wavelength demultiplexer and additional components, all on a single chip.

US 2019/227230 A1 describes a photonic chip including a device layer and a port layer, with an optical port located at the port layer. Inter-layer optical couplers are provided for coupling light between the device and port layers. The inter-layer couplers may be configured to couple signal light but block pump light or other undesired wavelength from entering the device layer, operating as an input filter.

US 2004/033004 A1 describes photonic integrated circuits (PICs) in the form of an optical receiver PIC or Rx PIC for use in an optical transport network.

US 2013/209020 A1 describes an optical coherent transceiver comprising a polarization and phase-diversity coherent receiver and a polarization and phase-diversity modulator on the same substrate interfaced by three grating couplers, one grating coupler coupling in a signal, one grating coupler coupling in a laser signal, and a third grating coupler coupling out a modulated signal.

US 2004/156096 A1 describes an integrated optical device including at least one input port for receiving optical energy, a plurality of output ports, and a user configurable optical network coupled to the input port for distributing the optical energy among the output ports in a prescribed manner in conformance with a user-selected configuration.

One of the reasons for slow developments of integrated fiber lasers and amplifiers is the necessity of pumping fiber-based gain media by respective dedicated pumps each of which is typically configured as an off-board diode laser. The pumps add cost and complexity to hybrid photonic laser systems which is, of course, a strong deterrent to the use of integrated EDFAs.

A need therefore exists for a broad application of the fiber-based gain media integrated in various photonic circuits and allowing for high performance and multiple functionalities on a single PIC.

Another need exists for multiple fiber gain media on a single PIC sharing a single pump.

### SUMMARY OF THE DISCLOSURE

The invention is defined in claim 1. Preferred embodiments of the invention are set out in the dependent claims.

The invention illustrated by the disclosed structural examples satisfies these needs. The examples are structurally and functionally interrelated and, as will be more apparent from the following description, can be combined with one another or used individually without contradicting the inventive concept.

The inventive concept provides for the integration of a fiber-based gain medium and a PIC as components of a non-hermetic photonic device. Provided with multiple fiber gain media, the PIC of the inventive photonic device is integrated with Si photonic passive and active elements, while a fiber link between the gain medium and PIC is substantially free from these elements. The photonic device is characterized by a high performance including a narrow linewidth, high power tunable laser with no temperature dependence and no patterning effects and high saturation power for a high output power of the amplifier section.

Accordingly, the inventive hybrid photonic device is configured with a PIC, multiple gain media or active fibers (i.e., fibers doped with light emitters such as ions of rare earth elements) coupled to the PIC, and at least one external pump common to at least some of all active fibers. The inventive photonic device may have a simple resonant cavity with practically limitless on-chip capability in accordance with any given task at hand and is characterized by a low power consumption and low cost. For the multiple fiber-based gain media, the number of pumps in the inventive configuration varies between one (1) and n, wherein n is at least one less than the number of active fibers. If the situation requires that each gain medium is energized by a designated pump, then an example not in accordance with the invention does not exclude such a configuration. Preferably, but not necessarily, the pump includes a diode laser consuming no more than a few mW. Alternatively, the pump may be configured, for example, as a fiber laser or have any other suitable configuration.

In accordance with one example of the inventive photonic circuit, the gain media include at least one active fiber having one or both fiber ends coupled to the PIC. The active fiber and the PIC form a hybrid resonant cavity therebetween defined between a pair of spaced reflectors. The reflectors may be provided in the fiber or fiber and chip, respectively or only in the chip and spaced apart to define therebetween an extended resonant cavity. Preferably, all fiber gain mediums are in direct optical communication with the PIC forming thus respective fiber links all free of active and passive photonic elements, which in turn, are integrated in the PIC. However, as known to one of ordinary skill, a fiber-based gain medium may be configured with a pair of input and output transverse single mode fibers spliced to respective opposite ends of the active fiber with a free end of the output passive fiber being optically coupled to the PIC. The configuration of the reflectors may include fiber Bragg gratings, fiber ring mirrors, mirrors integrated in the PIC, Sagnac loop mirrors and others known in the art. Preferably, the laser is tunable.

The exemplary photonic circuit is further configured with at least one or more fiber amplifiers coupled to the PIC and operative to amplify respective input and output light signals. Similar to the gain medium forming a hybrid resonant cavity with the PIC, all fiber amplifiers define respective fiber links free active and passive photonic device which are thus integrated with the PIC. A spatial filter may be added externally to the PIC or internally onto it to filter out the desired wavelength of the output light signal.

The pump light emitted by a single pump can be coupled into the fiber laser and fiber amplifiers in accordance with several pumping schemes. For example, the pump light can be directly injected into all active fibers outside the PIC. Alternatively, pump light can be coupled into the active fibers through the PIC.

### BRIEF DESCRIPTION OF THE DRAWINGS

The above and other examples, features and functions of the inventive PIC will become more readily apparent from the specific description illustrated by the following drawings:
FIG. 1 illustrates the disclosed hybrid photonic device;
FIG. 2 is an exemplary optical schematic of the photonic device of FIG. 1;
FIG. 3 is another exemplary optical schematic of the photonic device of FIG. 1;
FIG. 4 is an optical schematic of the transceiver based on the disclosed concept;
FIGs. 5 and 6 are respective optical schematics of a transmitter based on the disclosed concept;
FIG. 7 is an optical schematic of the receiver based on the disclosed concept; and
FIGs. 8 - 11 are respective exemplary optical schematics of a resonant cavity utilized in the disclosed photonic device.

### SPECIFIC DESCRIPTION

The following description provides an illustration and a further understanding of the inventive concept, but is not intended as a definition of the limits of the present disclosure. The following disclosure, together with the drawings, serve to explain principles and operations of the described inventive concept. In the figures, each identical or nearly identical component that is illustrated in various figures is represented by a like numeral. For purposes of clarity, not every component may be labeled in every figure.

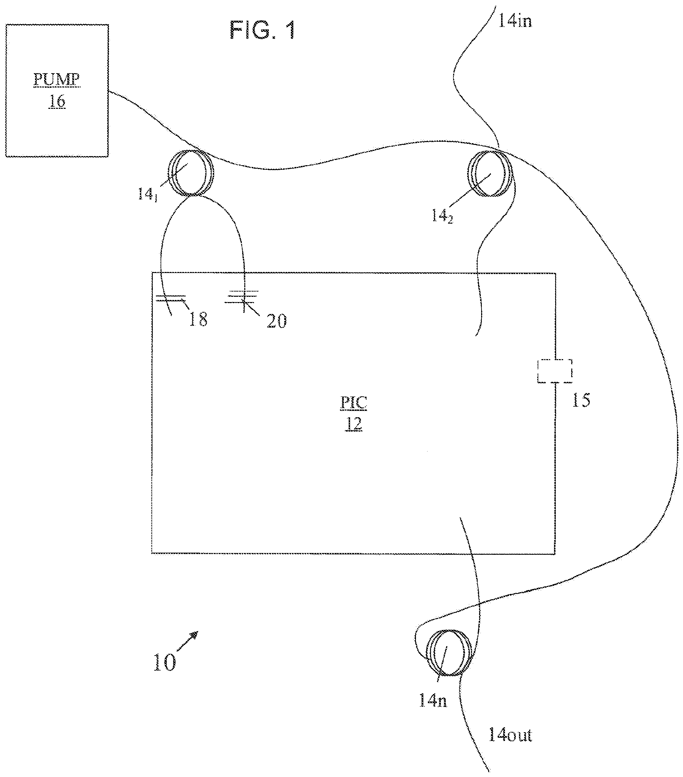

FIG. 1 diagrammatically illustrates the inventive photonic device 10 including multiple fiber gain media 14, each of which is an active fiber that has at least one core doped with ions of light emitters, and a PIC 12. Any of or all gain media may be configured as part of a hybrid laser 14₁, as shown in FIG. 1, and/or one or more fiber amplifiers 14₂. In case of the laser, a hybrid resonant cavity is formed between gain medium 14₁ and PIC 12. In contrast to the prior art, the active fiber extending to PIC 12 has no photonic elements coupled thereto. In other words, the active fiber is free from photonic elements. The photonic elements may include active elements, such as polarization modules, photodiodes and optical modulators and other devices having an intended dynamic interaction between light and matter, and photonic passive elements, such as reflectors, isolators, couplers, attenuators, circulators and other known elements. Some of the passive elements can be characterized as partway between passive and active elements. All of these photonic elements are integrated in PIC 12. However, a possibility still exists to form the optical cavity in the fiber by having one or both fiber Bragg gratings (FBG) 18, 20, respectively written in the fiber. In case of one FBG, the other reflector is provided in PIC 12. If the reflector or reflectors are written in fiber, it can be advantageous to write them in a passive fiber having opposite ends thereof spliced to the output of active fiber 14₁ and PIC 12, respectively.

Depending on the configuration of the resonant cavity of gain medium 14₁ (provided the latter is a fiber laser), all photonic passive elements including reflectors, polarization splitters, controllers and others, also may be integrated in PIC 12. The resonant cavity of the fiber laser is defined between reflectors 18, 20 which are selected from fiber Bragg gratings (FBG) and integrated in silicon ring mirrors, distributed Bragg grating, Sagnac loop mirrors, loop mirrors and others known in the photonic art.

In accordance with the inventive concept, photonic device 10 is configured with multiple gain media 14₁, 14₂ ... and 14ₙ with gain media 14₂ ... 14ₙ each being configured either as a fiber laser or fiber amplifier. For example, amplifier 14₂ may be an input amplifier with input fiber 14in, whereas amplifier 14n is an output amplifier with an output fiber 14out. A photonic device of the known prior art is configured with multiple fiber lasers/amplifiers energized by respective dedicated pumps in accordance with an end- or side-pumping technique. In contrast, disclosed photonic device 10 is configured with a pump 16 optically coupled to multiple gain media. Preferably, pump 16 is a single pump exciting all three shown fiber gain media. The minimal number of pumps is application specific, but in accordance with the inventive concept, this number is always less than or equal to the number of active fibers. It may be advantageous to use a combination of fiber-based gain medium and III - V gain material 15, which is bonded to PIC 12. or located outside it, to minimize unavoidable losses in PIC 12 as signals are guided between the input and output of PIC 12.

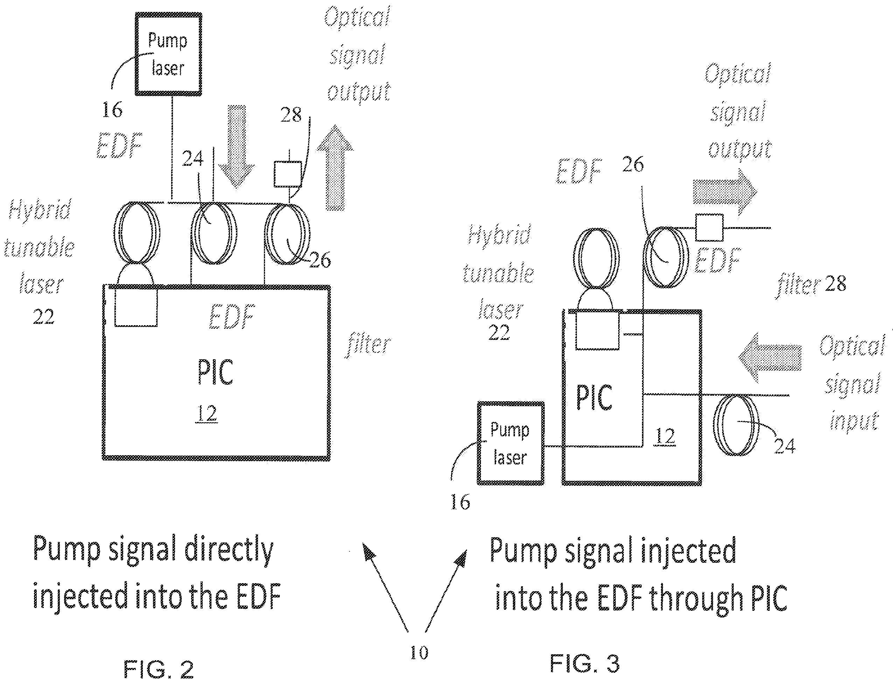

FIG. 2 illustrates an example of photonic device 10 including a tunable fiber laser 22 with a hybrid resonant cavity, which is formed between the gain medium and PIC 12, input signal and output signal fiber amplifiers 24, 26 respectively, and pump 16. The single pump 16 is directly optically coupled to the gain media of respective laser 22 and amplifiers 24, 26. After optical amplification of the output signal, a spatial filter 28 may be located downstream from output signal amplifier 26 to suppress excessive noise in the amplified output signal.

FIG. 3 illustrates a configuration similar to that of FIG. 2. However, pump 16 injects pump light into fiber laser 22 and fiber amplifiers 24, 26 through PIC 12. The pump light can be coupled into the gain medium in a co-propagating direction with the signal light. Alternatively, the pump light can be coupled into a gain medium in a counter-propagating direction, as shown in FIG. 3, or both co- and counter-propagating directions. The gain media, as mentioned above, is doped with ions any of the known light emitters including rare earth elements, but for the descriptive purposes, all active fibers are shown to be doped with ions of erbium (Rr).

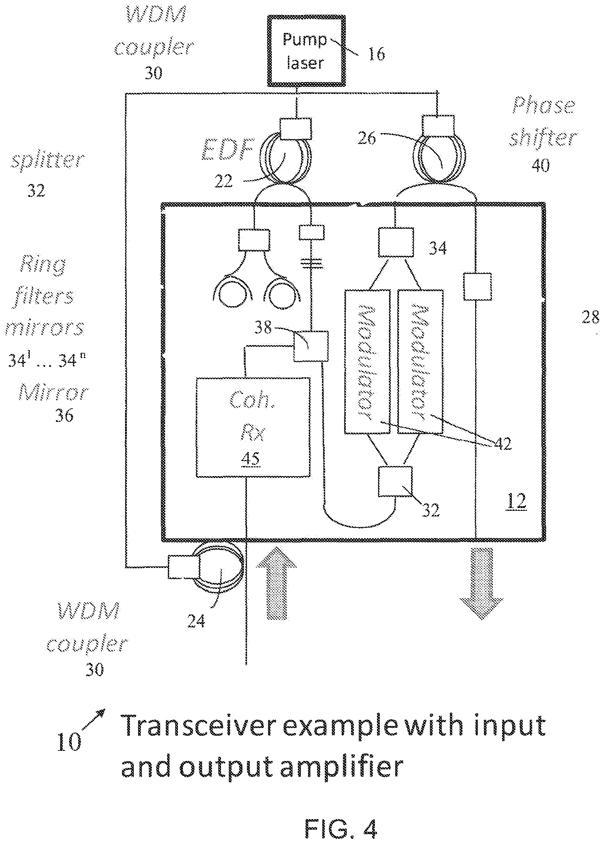

FIG. 4 illustrates photonic device 10 which, in this example, is a transceiver used in telecommunications. The Er-doped fiber gain medium 22 and PIC 12 form a tunable Fabry-Perot resonator therebetween which is defined between at least one or more ring filter mirrors 34¹, 34ⁿ and mirror 36 all integrated in PIC 12. The multiple ring filter mirrors 34', 34ⁿ are instrumental in utilizing the Vernier effect, which is a well-known technique that provides for the suppression of all lasing modes except for the desired resonant longitudinal mode. Accordingly, the hybrid resonator outputs light that can be effectively tuned by a phase shifter 40, well known to one of ordinary skill.

Characteristically, the illustrated transceiver receives an input signal carrying broadband light which is amplified by an input gain medium or fiber amplifier 24 prior to the injection thereof into PIC 12. Accordingly, illustrated photonic device 10 is configured with three gain media 22, 24 and 26, respectively all energized by single pump 16 injecting pump light into the gain media through three WDM couplers 30,

The mixing between the amplified input signal and a tapped off portion of the output lasing light in a coherent receiver 45 produces the detection of the desired information. The output light is divided in a splitter 38, which is integrated in PIC 12 downstream from partial reflectivity mirror 36, guiding the remaining portion of the lasing light toward a transmitter also integrated in PIC 12. The transmitter includes at least one modulator 42 selected from a phase or amplitude modulator. Preferably, the transmitter is configured with multiple modulators 42 receiving respective parts of the remaining portion of the output lasing light from another splitter 32. The modulated portions are collected in a combiner 34 and amplified in output signal fiber gain medium 26. The amplified modulated output light is further filtered within PIC 12 by spatial filter 28 optionally integrated in PIC 12.

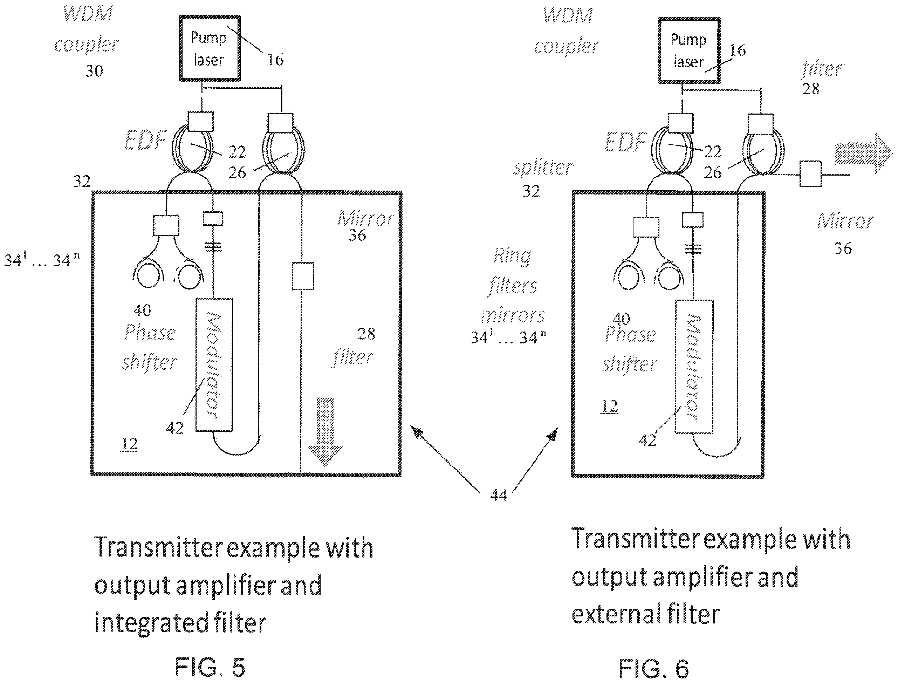

FIGs. 5 and 6 illustrate a transmitter 44 configured in accordance with the inventive concept providing for multiple gain media 22, 26 which receive pump light from pump 16 common to both gain mediums. The illustrated transmitter 44 can be used as a stand-alone hybrid photonic device or incorporated in the transceiver of FIG. 4.

In particular, FIG. 5 shows PIC 12 provided with the transmitter's components including the above discussed hybrid resonator between ring filter mirror 34¹ ... 34ⁿ and mirror 36, splitter 32, phase shifter 40, one or more modulators 42 and spatial filter 28 for suppressing the undesirable noise in the amplified output signal. According to the configuration of FIG. 6, the latter is not integrated in PIC 12, but located outside PIC 12 downstream from output light fiber amplifier 26.

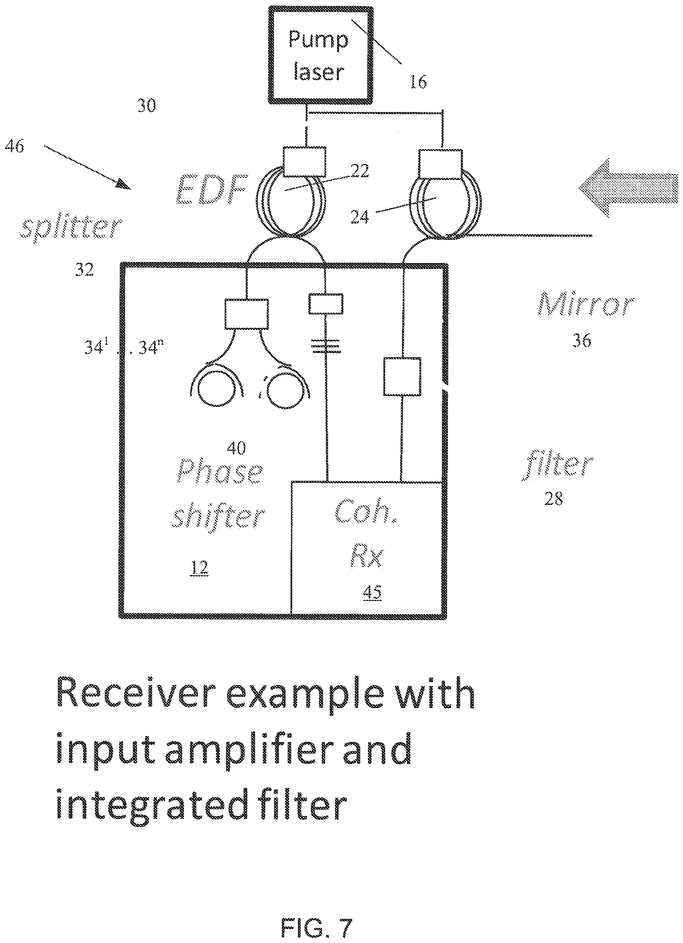

FIG. 7 exemplifies a receiver 46 provided with gain media 22 and 24 excited by pump light from pump 16 which is common to both gain media. The gain medium 22 and PIC 12. form a resonator in PIC 12 between ring filter mirrors 34¹ ... 34ⁿ and mirror 36. The spatial input filter 28 also integrated in PIC 12 cuts a narrow line out from broadband input light.

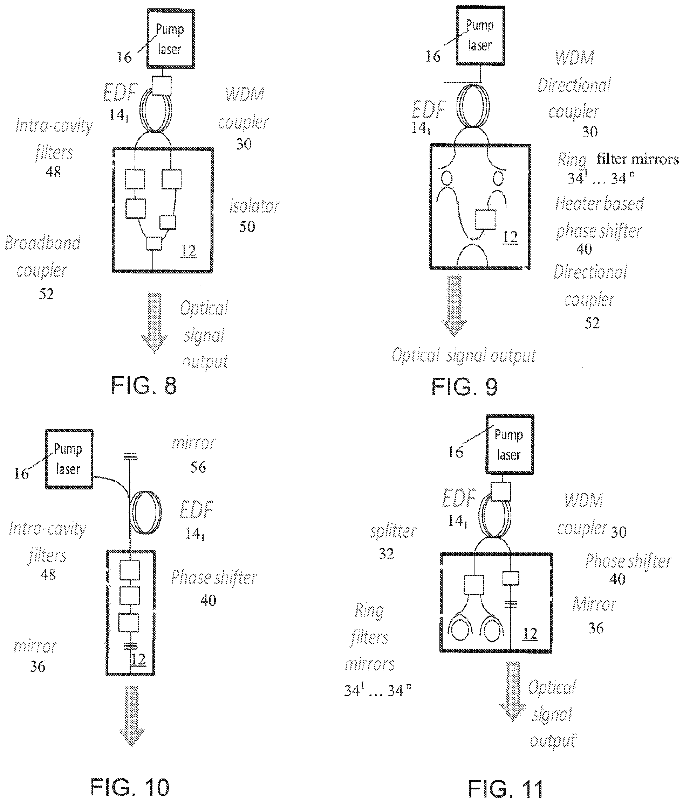

FIGs. 8 and 9 illustrate respective configurations of a ring resonator hybrid laser. The broadband output coupler 52 is integrated in PIC 12 and configured as a partial reflectivity mirror letting part of the light go through and another part be guided back into the cavity. It can include an adiabatic coupler and a curved coupler. One or more intra-cavity filters 48 and phase shifter 40 constitute the ring cavity and operate to tune the hybrid laser to output the desired lasing wavelength. Optionally inserted into the ring cavity is an isolator 50 controlling either a clockwise or counter-clockwise signal propagation direction in the ring cavity. Except for WDM coupler 30, all of the components mentioned above are integrated in PIC 12. The fiber of gain medium 14₁ is preferably polarization-maintaining for providing the desired polarization of the light signal without a need for the polarization controller.

FIG. 9 shows a more specific implementation of the ring resonator hybrid laser shown in FIG. 8. Like in FIG. 8, here the ring resonator is defined between PIC 12 and the fiber and receives pump light from WDM broadband directional coupler 30 which is located between pump 16 and gain medium 14₁. One or more ring filter mirrors 34₁ ... 34ₙ along with phase shifter 40 provide the selection of the desired lasing wavelength, generated in response to coupling pump light at another pump wavelength into the resonant cavity through WDM 30, and all inserted in the ring cavity. The output coupler 52, acting as a partial reflectivity mirror, guides the generated light at the lasing wavelength from the resonant cavity.

FIGs. 10 and 11 represent a linear architecture of the hybrid cavity. FIG. 10 illustrates the hybrid resonator defined between an FBG 56 written in the outside end of gain medium 14₁ and mirror 36 which is integrated in PIC 12. The cavity tuning to the desired lasing wavelength is provided by one or more intra-cavity filters 48 and phase shifter 40. As can be seen, pump 16 and gain medium 14₁ are arranged in accordance with a side pumping technique. FIG. 11 shows the hybrid resonator defined between ring filter mirrors 34¹ ... 34" and mirror 36.

Having thus described several examples, it is to be appreciated that various alterations, modifications, and improvements will readily occur to those skilled in the art. Such alterations, modifications, and improvements are intended to be part of this disclosure, and are intended to be within the scope of the examples discussed herein. Accordingly, the foregoing description and drawings are by way of example only. The invention is defined by the accompanying claims.

## Claims

1. A photonic device (10) comprising:
a photonic integrated circuit, PIC (12);
multiple fiber-based gain media (14₁, 14₂, ..., 14ₙ; 22, 24, 26) in optical communication with the PIC (12); and
at least one optical pump (16) outputting pump light coupled into and exciting the multiple fiber-based gain media,
wherein a total number of the at least one optical pump (16) is less than a total number of the multiple fiber-based gain media, and
wherein at least one of the multiple fiber-based gain media (14₁, 14₂, ..., 14ₙ; 22, 24, 26) and the PIC (12) form a hybrid resonant optical cavity that is defined between a pair of reflectors (18, 22).

2. The photonic device (10) of claim 1, wherein the at least one optical pump (16) comprises more than one optical pump (16).

3. The photonic device (10) of claim 1, wherein the hybrid resonant optical cavity is operative to lase light at a lasing wavelength coupled into the PIC (12).

4. The photonic device (10) of claim 1, wherein the reflectors are integrated in the PIC (12), the multiple fiber-based gain media (14₁, 14₂, ..., 14ₙ; 22, 24, 26) forming fiber links free from all active and passive photonic elements which are integrated in the PIC (12), the reflectors (18, 20) being selected from a distributed Bragg grating, broadband coupler, directional coupler, ring mirrors, or Sagnac loop mirrors or a combination thereof.

5. The photonic device (10) of claim 1, wherein the resonant optical cavity is defined between:
the reflectors (18, 20) provided in the PIC (12) and the one fiber-based gain medium (14₁, 14₂, ..., 14ₙ; 22, 24, 26), respectively, or
the reflectors (18, 20) written in the at least one of the multiple fiber-based gain media (14₁, 14₂, ..., 14ₙ; 22, 24, 26), at least one of the reflectors being a fiber Bragg grating.

6. The photonic device (10) of claim 3, wherein the hybrid resonant optical cavity including the at least one of the multiple fiber-based gain media (14₁, 14₂, ..., 14ₙ; 22, 24, 26) has a ring configuration or linear configuration.

7. The photonic device (10) of claim 6, wherein the hybrid resonant optical cavity including the at least one of the multiple fiber-based gain media (14₁, 14₂, ..., 14ₙ; 22, 24, 26) has the ring configuration and is optically interconnected within the PIC (12) with at least one or more intra-cavity filters (48), phase shifter (40), isolator optically and broadband coupler (30), wherein the intra-cavity filters (48) and the phase shifter (40) provide tuning of the at least one of the multiple fiber-based gain media (14₁, 14₂, ..., 14ₙ; 22, 24, 26) to a desired lasing wavelength selected from a range of wavelengths.

8. The photonic device (10) of claim 6, wherein the hybrid resonant optical cavity including the at least one of the multiple fiber-based gain media (14₁, 14₂, ..., 14ₙ; 22, 24, 26) has the ring configuration and is tunable and provided with spaced apart WDM pump light input and output directional couplers (30), one or more ring filters (34¹, 34"), and a phase shifter (40), wherein one of the spaced apart WDM pump light input and output directional couplers (30), the one or more ring filters (34¹, 34"), and the phase shifter (40) are integrated in the PIC (12) and another of the spaced apart WDM pump light input and output directional couplers (30) is located upstream from the at least one of the multiple fiber-based gain media (14₁, 14₂, ..., 14ₙ; 22, 24, 26).

9. The photonic device (10) of claim 6, wherein the hybrid resonant optical cavity including the at least one of the multiple fiber-based gain media (14₁, 14₂, ..., 14ₙ; 22, 24, 26) has the linear configuration and is tunable and defined between two mirrors (36, 56) which flank one or more intra-cavity filters (48) and a phase shifter (40), the filters (48), phase-shifter (40) and one of the mirrors (36, 56) being integrated in the PIC (12).

10. The photonic device (10) of claim 6, wherein the hybrid resonant optical cavity including the at least one of the multiple fiber-based gain media (14₁, 14₂, ..., 14ₙ; 22, 24, 26) has the linear configuration and is defined between one or more ring filters (34¹, 34ⁿ) and a mirror (36) and includes an intra-cavity light splitter (38) and phase shifter (40) all integrated in the PIC (12).

11. The photonic device (10) of claim 1, wherein the at least one optical pump (16) is optically coupled into the multiple fiber-based gain media (14₁, 14₂, ..., 14ₙ; 22, 24, 26) outside the PIC (12) or through the PIC (12).

12. The photonic device (10) of claim 11, wherein the multiple fiber-based gain media (14₁, 14₂, ..., 14ₙ; 22, 24, 26) further includes fiber amplifiers (24, 26) which form respective fiber links free from active and passive optical elements.

13. The photonic device (10) of claim 12, wherein the fiber amplifiers (24, 26) are operative to amplify respective input and output signals, so that the optical device is a transceiver provided with all components of a receiver (46) and transmitter (44) integrated in the PIC (12).

14. The photonic device (10) of claim 13, wherein the receiver (46) is provided with the hybrid resonant cavity and the transmitter (44) includes one or more modulators (42) and a spatial filter (28), the spatial filter (28) being located downstream from an output fiber amplifier (26), of the fiber amplifiers (24, 26), in the PIC (12) or outside thereof.

15. The photonic device (10) of claim 1 further comprising a III-V semiconductor material gain medium in optical communication with the multiple fiber-based gain media (14₁, 14₂, ..., 14ₙ; 22, 24, 26) and bonded to or located outside the PIC (12).

## Patentansprüche

1. Eine photonische Vorrichtung (10), die Folgendes umfasst:
eine photonische integrierte Schaltung, PIC (12);
mehrere faserbasierte Verstärkungsmedien (14₁, 14₂, ..., 14ₙ; 22, 24, 26) in optischer Kommunikation mit der PIC (12); und
mindestens eine optische Pumpe (16), die Pumplicht ausgibt, das in die mehreren faserbasierten Verstärkungsmedien eingekoppelt wird und diese anregt,
wobei eine Gesamtzahl der mindestens einen optischen Pumpe (16) kleiner ist als eine Gesamtzahl der mehreren faserbasierten Verstärkungsmedien, und
wobei mindestens eines der mehreren faserbasierten Verstärkungsmedien (14₁, 14₂, ..., 14ₙ; 22, 24, 26) und die PIC (12) einen hybriden optischen Resonanzhohlraum bilden, der zwischen einem Paar von Reflektoren (18, 22) definiert ist.

2. Die photonische Vorrichtung (10) nach Anspruch 1, wobei die mindestens eine optische Pumpe (16) mehr als eine optische Pumpe (16) umfasst.

3. Die photonische Vorrichtung (10) nach Anspruch 1, wobei der hybride optische Resonanzhohlraum dazu betreibbar ist, Licht mit einer Laserwellenlänge zu lasern, das in die PIC (12) eingekoppelt wird.

4. Die photonische Vorrichtung (10) nach Anspruch 1, wobei die Reflektoren in der PIC (12) integriert sind, wobei die mehreren faserbasierten Verstärkungsmedien (14₁, 14₂, ..., 14ₙ; 22, 24, 26) Faserverbindungen bilden, die frei von allen aktiven und passiven photonischen Elementen sind, die in der PIC (12) integriert sind, wobei die Reflektoren (18, 20) ausgewählt werden aus einem verteilten Bragg-Gitter, einem Breitbandkoppler, einem Richtungskoppler, Ringspiegeln oder Sagnac-Schleifenspiegeln oder einer Kombination davon.

5. Die photonische Vorrichtung (10) nach Anspruch 1, wobei der optische Resonanzhohlraum definiert ist zwischen:
jeweils den in der PIC (12) vorgesehenen Reflektoren (18, 20) und dem einen faserbasierten Verstärkungsmedium (14₁, 14₂, ..., 14ₙ; 22, 24, 26), oder
den Reflektoren (18, 20), die in dem mindestens einen von mehreren faserbasierten Verstärkungsmedien (14₁, 14₂, ..., 14ₙ; 22, 24, 26) eingeschrieben sind (*written*), wobei mindestens einer der Reflektoren ein Faser-Bragg-Gitter ist.

6. Die photonische Vorrichtung (10) nach Anspruch 3, wobei der hybride optische Resonanzhohlraum, der mindestens eines der mehreren faserbasierten Verstärkungsmedien (14₁, 14₂, ..., 14ₙ; 22, 24, 26) beinhaltet, eine Ringkonfiguration oder eine lineare Konfiguration aufweist.

7. Die photonische Vorrichtung (10) nach Anspruch 6, wobei der hybride optische Resonanzhohlraum, der mindestens eines der mehreren faserbasierten Verstärkungsmedien (14₁, 14₂, ..., 14ₙ; 22, 24, 26) beinhaltet, die Ringkonfiguration aufweist und innerhalb der PIC (12) mit mindestens einem oder mehreren resonator- bzw. hohlraum internen Filtern (*intra-cavity filters*) (48), einem Phasenschieber (40), einem optischen Isolator und einem Breitbandkoppler (30) optisch verbunden ist, wobei die hohlrauminternen Filter (48) und der Phasenschieber (40) eine Abstimmung des mindestens einen der mehreren faserbasierten Verstärkungsmedien (14₁, 14₂, ..., 14ₙ; 22, 24, 26) auf eine gewünschte Laserwellenlänge bereitstellen, die aus einem Bereich von Wellenlängen ausgewählt ist.

8. Die photonische Vorrichtung (10) nach Anspruch 6, wobei der hybride optische Resonanzhohlraum, der den mindestens einen der mehreren faserbasierten Verstärkungsmedien (14₁, 14₂, ..., 14ₙ; 22, 24, 26) beinhaltet, die Ringkonfiguration aufweist und abstimmbar ist und mit beabstandeten WDM-Pumplicht-Eingangs- und Ausgangsrichtkopplern (30), einem oder mehreren Ringfiltern (34¹, 34") und einem Phasenschieber (40) versehen ist, wobei einer von den beabstandeten WDM-Pumplicht-Eingangs- und Ausgangsrichtkopplern (30) der eine oder die mehreren Ringfilter (34¹, 34") und der Phasenschieber (40) in der PIC (12) integriert sind, und sich ein anderer der beabstandeten WDM-Pumplicht-Eingangs- und Ausgangsrichtkopplern (30) stromaufwärts von dem mindestens einen der mehreren faserbasierten Verstärkungsmedien (14₁, 14₂, ..., 14ₙ; 22, 24, 26) befindet.

9. Die photonische Vorrichtung (10) nach Anspruch 6, wobei der hybride optische Resonanzhohlraum, der das mindestens eine der mehreren faserbasierten Verstärkungsmedien (14₁, 14₂, ..., 14ₙ; 22, 24, 26) beinhaltet, die lineare Konfiguration aufweist und abstimmbar ist und zwischen zwei Spiegeln (36, 56) definiert ist, die einen oder mehrere hohlrauminternen Filter (48) und einen Phasenschieber (40) flankieren, wobei die Filter (48), der Phasenschieber (40) und einer der Spiegel (36, 56) in der PIC (12) integriert sind.

10. Die photonische Vorrichtung (10) nach Anspruch 6, wobei der hybride optische Resonanzhohlraum, der das mindestens eine der mehreren faserbasierten Verstärkungsmedien (14₁, 14₂, ..., 14ₙ; 22, 24, 26) enthält, die lineare Konfiguration aufweist und zwischen einem oder mehreren Ringfiltern (34¹, 34") und einem Spiegel (36) definiert ist und einen hohlrauminternen Lichtteiler (38) und einen Phasenschieber (40) beinhaltet, die alle in der PIC (12) integriert sind.

11. Die photonische Vorrichtung (10) nach Anspruch 1, wobei die mindestens eine optische Pumpe (16) optisch in die mehreren faserbasierten Verstärkungsmedien (14₁, 14₂, ..., 14ₙ; 22, 24, 26) außerhalb der PIC (12) oder durch die PIC (12) einkoppelt.

12. Die photonische Vorrichtung (10) nach Anspruch 11, wobei die mehreren faserbasierten Verstärkungsmedien (14₁, 14₂, ..., 14ₙ; 22, 24, 26) ferner Faserverstärker (24, 26) beinhalten, die entsprechende Faserverbindungen bilden, die frei von aktiven und passiven optischen Elementen sind.

13. Die photonische Vorrichtung (10) nach Anspruch 12, wobei die Faserverstärker (24, 26) dazu betreibbar sind, entsprechende Eingangs- und Ausgangssignale zu verstärken, sodass die optische Vorrichtung ein Transceiver ist, der mit allen Komponenten eines Empfängers (46) und eines Senders (44) ausgestattet ist, der in der PIC (12) integriert ist.

14. Die photonische Vorrichtung (10) nach Anspruch 13, wobei der Empfänger (46) mit dem hybriden Resonanzhohlraum versehen ist, und der Sender (44) einen oder mehrere Modulatoren (42) und einen räumlichen Filter (28) beinhaltet, wobei der räumliche Filter (28) stromabwärts von einem Ausgangsfaserverstärker (26) der Faserverstärker (24, 26) in der PIC (12) oder außerhalb davon angeordnet ist.

15. Die photonische Vorrichtung (10) nach Anspruch 1, die ferner ein Verstärkungsmedium aus einem III-V-Halbleitermaterial umfasst, das in optischer Kommunikation mit den mehreren faserbasierten Verstärkungsmedien (14₁, 14₂, ..., 14ₙ; 22, 24, 26) steht und mit der PIC (12) verbunden ist oder sich außerhalb desselben befindet.

## Revendications

1. Un dispositif photonique (10) comprenant :
un circuit intégré photonique, CIP (*photonic integrated circuit* - PIC) (12) ;
plusieurs milieux de gain à base de fibres (14₁, 14₂, ..., 14ₙ ; 22, 24, 26) en communication optique avec le CIP (12) ; et
au moins une pompe optique (16) émettant une lumière de pompage couplée aux multiples milieux de gain à base de fibres et les excitant,
sachant qu'un nombre total de la ou des pompes optiques (16) est inférieur à un nombre total de la pluralité de milieux de gain à fibres, et
sachant qu'au moins un de la pluralité de milieux de gain à fibres (14₁, 14₂, ..., 14ₙ ; 22, 24, 26) et le CIP (12) forment une cavité optique résonante hybride définie entre une paire de réflecteurs (18, 22).

2. Le dispositif photonique (10) d'après la revendication 1, sachant que l'au moins une pompe optique (16) comprend plus d'une pompe optique (16).

3. Le dispositif photonique (10) d'après la revendication 1, sachant que la cavité optique résonante hybride est opérationnelle pour provoquer une émission laser de lumière à une longueur d'onde laser injectée ou encore couplée (*coupled*) vers l'intérieur du CIP (12).

4. Le dispositif photonique (10) d'après la revendication 1, sachant que les réflecteurs sont intégrés dans le CIP (12), les multiples milieux de gain à base de fibres (14₁, 14₂, ..., 14ₙ; 22, 24, 26) formant des liaisons à fibre exemptes de tout élément photonique actif et passif qui sont intégrés dans le CIP (12), les réflecteurs (18, 20) étant sélectionnés parmi : un réseau de Bragg réparti, un coupleur à large bande, un coupleur directionnel, des miroirs annulaires ou des miroirs à boucle de Sagnac, ou une combinaison de ceux-ci.

5. Le dispositif photonique (10) d'après la revendication 1, sachant que la cavité optique résonante est définie entre :
les réflecteurs (18, 20) fournis dans le CIP (12) et le milieu de gain à base de fibre (14₁, 14₂, ..., 14ₙ; 22, 24, 26), respectivement, ou entre
les réflecteurs (18, 20) inscrits dans au moins un des multiples milieux de gain à base de fibres (14₁, 14₂, ..., 14ₙ ; 22, 24, 26), au moins un des réflecteurs étant un réseau de Bragg à fibres.

6. Le dispositif photonique (10) d'après la revendication 3, sachant que la cavité optique résonante hybride incluant l'au moins un des multiples milieux de gain à base de fibres (14₁, 14₂, ..., 14ₙ ; 22, 24, 26) présente une configuration en anneau ou une configuration linéaire.

7. Le dispositif photonique (10) d'après la revendication 6, sachant que la cavité optique résonante hybride incluant l'au moins un des multiples milieux de gain à base de fibres (14₁, 14₂, ..., 14ₙ ; 22, 24, 26) présente la configuration en anneau et est interconnectée optiquement dans le CIP (12) avec au moins un ou plusieurs filtres intra-cavité (48), un déphaseur (40), un isolateur optique et un coupleur à large bande (30), sachant que les filtres intra-cavité (48) et le déphaseur (40) assurent l'accord d'au moins un des multiples milieux de gain à base de fibres (14₁, 14₂, ..., 14ₙ ; 22, 24, 26) à une longueur d'onde d'émission désirée choisie dans une gamme de longueurs d'onde.

8. Le dispositif photonique (10) d'après la revendication 6, sachant que la cavité optique résonante hybride incluant l'au moins un des multiples milieux de gain à base de fibres (14₁, 14₂, ..., 14ₙ ; 22, 24, 26) présente la configuration en anneau et est accordable et fournie avec des coupleurs directionnels d'entrée et de sortie pour lumière de pompage WDM espacés (30), un ou plusieurs filtres annulaires (34¹, 34ⁿ), et un déphaseur (40), sachant que l'un des coupleurs directionnels d'entrée et de sortie pour lumière de pompage WDM espacés (30), le ou les filtres annulaires (34¹, 34") et le déphaseur (40) sont intégrés dans le CIP (12), et qu'un autre des coupleurs directionnels d'entrée et de sortie pour lumière de pompage WDM espacés (30) est situé en amont du ou des milieux de gain à fibres multiples (14₁, 14₂, ..., 14ₙ ; 22, 24, 26).

9. Le dispositif photonique (10) d'après la revendication 6, sachant que la cavité optique résonante hybride comprenant l'au moins un des multiples milieux de gain à base de fibres (14₁, 14₂, ..., 14ₙ ; 22, 24, 26) présente la configuration linéaire et est accordable et définie entre deux miroirs (36, 56) qui flanquent un ou plusieurs filtres intra-cavité (48) et un déphaseur (40), les filtres (48), le déphaseur (40) et l'un des miroirs (36, 56) étant intégrés dans le CIP (12).

10. Le dispositif photonique (10) d'après la revendication 6, sachant que la cavité optique résonante hybride comprenant l'au moins un des multiples milieux de gain à base de fibres (14₁, 14₂, ..., 14ₙ; 22, 24, 26) présente la configuration linéaire et est définie entre un ou plusieurs filtres annulaires (34¹, 34") et un miroir (36) et inclut un séparateur ou encore diviseur de lumière (*light splitter*) intra-cavité (38) et un déphaseur (40), tous intégrés dans le CIP (12).

11. Le dispositif photonique (10) d'après la revendication 1, sachant que la au moins une pompe optique (16) est couplée optiquement dans les multiples milieux de gain à base de fibres (14₁, 14₂, ..., 14ₙ ; 22, 24, 26) à l'extérieur du CIP (12) ou à travers le CIP (12).

12. Le dispositif photonique (10) d'après la revendication 11, sachant que les multiples milieux de gain à base de fibres (14₁, 14₂, ..., 14ₙ; 22, 24, 26) incluent en outre des amplificateurs à fibre (24, 26) qui forment des liaisons à fibre respectives exemptes d'éléments optiques actifs et passifs.

13. Le dispositif photonique (10) d'après la revendication 12, sachant que les amplificateurs à fibre (24, 26) sont opérationnels pour amplifier les signaux d'entrée et de sortie respectifs, de manière que le dispositif optique soit un émetteur-récepteur pourvu de tous les composants d'un récepteur (46) et d'un émetteur (44) intégré dans le CIP (12).

14. Le dispositif photonique (10) d'après la revendication 13, sachant que le récepteur (46) est pourvu de la cavité résonnante hybride et que l'émetteur (44) inclut un ou plusieurs modulateurs (42) et un filtre spatial (28), le filtre spatial (28) étant situé en aval d'un amplificateur à fibre de sortie (26), des amplificateurs à fibre (24, 26), dans le CIP (12) ou à l'extérieur de celui-ci.

15. Le dispositif photonique (10) d'après la revendication 1 comprend en outre un milieu de gain en matériau semi-conducteur III-V en communication optique avec les multiples milieux de gain à fibres (14₁, 14₂, ..., 14ₙ ; 22, 24, 26) et lié au CIP (12) ou situé à l'extérieur de celui-ci.
